Europäisches Patentamt

European Patent Office

Office européen des brevets

(19)

(11) Veröffentlichungsnummer : **0 312 876 B1**

# (12) EUROPÄISCHE PATENTSCHRIFT

(45) Veröffentlichungstag der Patentschrift :
**03.04.91 Patentblatt 91/14**

(51) Int. Cl.$^5$ : **C08F 10/02, C08F 4/68**

(21) Anmeldenummer : **88116804.1**

(22) Anmeldetag : **11.10.88**

(54) Verfahren zum Herstellen von Homopolymerisaten des Ethens sowie Copolymerisaten des Ethens mit höheren alpha-Monoolefinen mittels eines Ziegler-Katalysatorsystems.

(30) Priorität : **17.10.87 DE 3735252**

(43) Veröffentlichungstag der Anmeldung :
**26.04.89 Patentblatt 89/17**

(45) Bekanntmachung des Hinweises auf die
Patenterteilung :
**03.04.91 Patentblatt 91/14**

(84) Benannte Vertragsstaaten :
**AT BE DE ES FR GB IT**

(56) Entgegenhaltungen :
**EP-A- 0 078 996**
**EP-A- 0 120 501**

(73) Patentinhaber : **BASF Aktiengesellschaft**
**Carl-Bosch-Strasse 38**
**W-6700 Ludwigshafen (DE)**

(72) Erfinder : **Funk, Guido, Dr.**
**Dürerstr. 5**
**W-6520 Worms 1 (DE)**
Erfinder : **Bachl, Robert, Dr.**
**Parsevalstr. 2**
**W-6520 Worms 1 (DE)**
Erfinder : **Saive, Roland, Dr.**
**Pfarrer Friedrich-Str. 44**
**W-6700 Ludwigshafen (DE)**

EP 0 312 876 B1

**Beschreibung**

Die vorliegende Erfindung betrifft ein Verfahren zum diskontinuierlichen und – insbesondere – kontinuierlichen Herstellen von Homopolymerisaten des Ethens sowie – insbesondere – Copolymerisaten des Ethens mit untergeordneten Mengen an $C_3$- bis $C_8$-, insbesondere $C_4$- bis $C_6$-α-Monolefinen durch Polymerisation des bzw. der Monomeren bei Temperaturen von 30 bis 200, insbesondere von 50 bis 125°C und Drücken von 0,1 bis 200, insbesondere von 5 bis 60 bar mittels eines Ziegler-Katalysatorsystems aus

(1) einer Übergangsmetall-Katalysatorkomponente und

(2) einer Organoaluminium-Katalysatorkomponente der Formel $AlR_mX_{3-m}$, worin stehen

X für einen Rest OR, Chlor, Brom bzw. Wasserstoff, vorzugsweise einen Rest OR bzw. Chlor,

R für einen $C_1$- bis $C_{18}$-Kohlenwasserstoffrest, insbesondere einen $C_1$- bis $C_{12}$-Alkylrest, und vorzugsweise einen $C_2$- bis $C_8$-Alkylrest,

m für eine Zahl von 1 bis 3, vorzugsweise eine Zahl von 2 bis 3,

sowie

(3) einer Organohalogen-Katalysatorkomponente (= Cokatalysator),

mit den Maßgaben, daß das Atomverhältnis Übergangsmetall aus der Katalysatorkomponente (1) : Aluminium aus der Katalysatorkomponente (2) im Bereich von 1 : 0,1 bis 1 : 500, vorzugsweise 1 : 0,2 bis 1 : 50, und das Molverhältnis Organoaluminium-Katalysatorkomponente (2) : Organohalogen-Katalysatorkomponente (3) im Bereich von 1 : 0,001 bis 1 : 50, vorzugsweise 1 : 0,01 bis 1 : 10 liegt, und wobei eingesetzt wird als Übergangsmetall-Katalysatorkomponente (1) das festphasige Produkt (VI), das erhalten worden ist, indem man

(1.1) zunächst

(1.1.1) einen feinteiligen, porösen, anorganisch-oxidischen Stoff (I), der einen Teilchendurchmesser von 1 bis 1.000, vorzugsweise 1 bis 400 μm, ein Porenvolumen von 0,3 bis 3, vorzugsweise 1 bis 2,5 cm³/g sowie eine Oberfläche von 100 bis 1.000, vorzugsweise 200 bis 400 m²/g besitzt und die Formel $SiO_2 \cdot aAl_2O_3$ – worin a steht für eine Zahl im Bereich von 0 bis 2, insbesondere 0 bis 0,5 – hat, und

(1.1.2) eine Lösung (II), wie sie sich ergibt beim Zusammenbringen von

(IIa) 100 Gewichtsteilen eines Oxakohlenwasserstoffs gesättigt aliphatischer oder teils gesättigt aliphatischer, teils aromatischer Natur, der 1 bis 2 Oxasauerstoffatome sowie mehr als 3, aber weniger als 19 Kohlenstoffatome aufweist, vorzugsweise eines Oxakohlenwasserstoffs gesättigt aliphatischer oder teils gesättigt aliphatischer, teils aromatischer Natur, der 1 Oxasauerstoffatom sowie mehr als 3 aber weniger als 11 Kohlenstoffatome aufweist, insbesondere eines ringgeschlossenen Oxakohlenwasserstoffs gesättigt aliphatischer Natur, der 1 Oxasauerstoffatom sowie 4 bis 6 Kohlenstoffatome aufweist, und vor allem Tetrahydrofuran, und

(IIb) 0,01 bis 50, vorzugsweise 1 bis 30 Gewichtsteilen einer Übergangsmetall-Ausgangskomponente

miteinander in Berührung bringt unter Bildung einer Suspension (III), mit der Maßgabe, daß das Gewichtsverhältnis anorganisch-oxidischer Stoff (I) : Übergangsmetall-Ausgangskomponente (IIb) im Bereich von 1 : 0,01 bis 1 : 2, vorzugsweise von 1 : 0,2 bis 1 : 1,5 liegt, die Suspension (III) bei einer Temperatur, die unterhalb von 200, vorzugsweise von 160°C und oberhalb des Schmelzpunktes des verwendeten Oxakohlenwasserstoffs (IIa) liegt, bis zur trockenen Konsistenz-Bildung eines festphasigen Zwischenprodukts (IV) eindampft, und

(1.2) dann

(1.2.1) das aus Stufe (1.1) erhaltene festphasige Zwischenprodukt (IV) und

(1.2.2) eine in einem organischen Lösungsmittel gelöste Aluminiumverbindung (V) der Formel $AlR_mX_{3-m}$, worin stehen

X für einen Rest OR, Chlor, Brom bzw. Wasserstoff, vorzugsweise einen Rest OR bzw. Chlor,

R für einen $C_1$- bis $C_{18}$-Kohlenwasserstoffrest, insbesondere einen $C_1$- bis $C_{12}$-Alkylrest, und vorzugsweise einen $C_2$- bis $C_8$-Alkylrest, und

m für eine Zahl von 1 bis 3, vorzugsweise die Zahl 2,

miteinander in Berührung bringt unter Bildung einer Suspension, mit der Maßgabe, daß das Gewichtsverhältnis festphasiges Zwischenprodukt (IV) : Aluminiumverbindung (V) im Bereich von 1 : 0,05 bis 1 : 2, vorzugsweise 1 : 0,1 bis 1 : 1, liegt, – wobei das dabei als Suspendiertes resultierende festphasige Produkt (VI) die Übergangsmetall-Katalysatorkomponente (1) ist – .

Polymerisationsverfahren dieser Art sind bekannt, wobei im gegebenen Zusammenhang als repräsentativ das in der EP-OS 0 166 888 beschriebene gelten kann. Die dort offenbarte Übergangsmetall-Katalysatorkomponente (1), die gewonnen wird aus einer Übergangsmetall-Ausgangskomponente (IIb), bestehend aus einem Gemisch aus einer bestimmten Vanadium- und einer bestimmten Titankomponente sowie gegebenenfalls und

EP 0 312 876 B1

vorteilhafterweise Zirkontetrahalogenid, erlaubt zwar die Herstellung von Homo- und Copolymerisaten des Ethens mit gezielt einstellbarer, sehr breiter Molmassenverteilung bei guter Produktivität und Kornbeschaffenheit der Produkte ; bei speziellen Aufgabenstellungen, z.B. für die Herstellung von hochmolekularen, hochdichten Produkten läßt die Produktivität des Systems und die Kornbeschaffenheit der erhaltenen Polymerisate indes noch Wünsche offen.

Des weiteren ist eine Übergangsmetall-Katalysatorkomponente (1) bekannt, so aus der EP-OS 0 078 996, die hergestellt wird durch Auftragen von $VCl_3$ aus einem Alkohol als Lösungsmittel auf $SiO_2$, worauf in einer zweiten Stufe mit einem Aluminiumalkyl umgesetzt wird. Diese Katalysatorkomponente ist aber zum Erreichen des Zieles, bei zugleich guter Produktivität Homo- bzw. Copolymerisate des Ethens mit guter Kornbeschaffenheit und mittelbreiter Molmassenverteilung herzustellen, ungeeignet.

Schließlich ist in der US-PS 4 508 842 eine Übergangsmetall-Katalysatorkomponente (1) beschrieben, die durch Auftragen von $VCl_3$ aus einem Elektronendonator als Lösungsmittel auf $SiO_2$ hergestellt wird. Die dabei gewählten Mengen an Übergangsmetall auf dem $SiO_2$ sind aber ebenfalls zum Erreichen des Zieles, bei zugleich guter Produktivität Polymerisate mit guter Kornbeschaffenheit zu erzeugen, ungeeignet.

Es bestand daher die Aufgabe, eine neue Übergangsmetall-Katalysatorkomponente (1) aufzuzeigen, die es gegenüber den bekannten erlaubt, bei zugleich hoher Produktivität Polymerisate mit mittelbreiter Molmassenverteilung und guter Kornbeschaffenheit herzustellen.

Es wurde gefunden, daß die gestellte Aufgabe gelöst werden kann mit einer Übergangsmetall-Katalysatorkomponente (1) der eingangs definierten Art, bei deren Herstellung man als Übergangsmetall-Ausgangskomponente (IIb) ausschließlich und allein einen bestimmten Vanadium-Alkohol-Komplex eingesetzt hat.

Gegenstand der vorliegenden Erfindung ist dementsprechend ein Verfahren zum diskontinuierlichen und – insbesondere – kontinuierlichen Herstellen von Homopolymerisaten des Ethens sowie – insbesondere – Copolymerisaten des Ethens mit untergeordneten Mengen an $C_3$- bis $C_8$-, insbesondere $C_4$- bis $C_8$-$\alpha$-Monolefinen durch Polymerisation des bzw. der Monomeren bei Temperaturen von 30 bis 200, insbesondere von 50 bis 125°C und Drücken von 0,1 bis 200, insbesondere von 5 bis 60 bar mittel eines Ziegler-Katalysatorsystems aus

(1) einer Übergangsmetall-Katalysatorkomponente und
(2) einer Organoaluminium-Katalysatorkomponente der Formel $AlR_mX_{3-m}$, worin stehen
    X für einen Rest OR, Chlor, Brom bzw. Wasserstoff, vorzugsweise einen Rest OR bzw. Chlor,
    R für einen $C_1$- bis $C_{18}$-Kohlenwasserstoffrest, insbesondere einen $C_1$- bis $C_{12}$-Alkylrest, und vorzugsweise einen $C_2$- bis $C_8$-Alkylrest,
    m für eine Zahl von 1 bis 3, vorzugsweise eine Zahl von 2 bis 3,
    sowie
(3) einer Organohalogen-Katalysatorkomponente (= Cokatalysator),
mit den Maßgaben, daß das Atomverhältnis Übergangsmetall aus der Katalysatorkomponente (1) : Aluminium aus der Katalysatorkomponente (2) im Bereich von 1 : 0,1 bis 1 : 500, vorzugsweise 1 : 0,2 bis 1 : 50, und das Molverhältnis Organoaluminium-Katalysatorkomponente (2) : Organohalogen-Katalysatorkomponente (3) im Bereich von 1 : 0,001 bis 1 : 50, vorzugsweise 1 : 0,01 bis 1 : 10 liegt, und wobei eingesetzt wird als Übergangsmetall-Katalysatorkomponente (1) das festphasige Produkt (VI), das erhalten worden ist, indem man

(1.1) zunächst
(1.1.1) einen feinteiligen, porösen, anorganisch-oxidischen Stoff (I), der einen Teilchendurchmesser von 1 bis 1.000, vorzugsweise 1 bis 400 μm, ein Porenvolumen von 0,3 bis 3, vorzugsweise 1 bis 2,5 $cm^3/g$ sowie eine Oberfläche von 100 bis 1.000, vorzugsweise 200 bis 400 $m^2/g$ besitzt und die Formel $SiO_2 \cdot aAl_2O_3$ – worin a steht für eine Zahl im Bereich von 0 bis 2, insbesondere 0 bis 0,5 – hat, und
(1.1.2) eine Lösung (II), wie sie sich ergibt beim Zusammenbringen von
    (IIa) 100 Gewichtsteilen eines Oxakohlenwasserstoffs gesättigt aliphatischer oder teils gesättigt aliphatischer, teils aromatischer Natur, der 1 bis 2 Oxasauerstoffatome sowie mehr als 3, aber weniger als 19 Kohlenstoffatome aufweist, vorzugsweise eines Oxakohlenwasserstoffs gesättigt aliphatischer oder teils gesättigt aliphatischer, teils aromatischer Natur, der 1 Oxasauerstoffatom sowie mehr als 3 aber weniger als 11 Kohlenstoffatome aufweist, insbesondere eines ringgeschlossenen Oxakohlenwasserstoffs gesättigt aliphatischer Natur, der 1 Oxasauerstoffatom sowie 4 bis 6 Kohlenstoffatome aufweist, und vor allem Tetrahydrofuran, und
    (IIb) 0,01 bis 50, vorzugsweise 1 bis 30 Gewichtsteilen einer Übergangsmetall-Ausgangskomponente

miteinander in Berührung bringt unter Bildung einer Suspension (III), mit der Maßgabe, daß das Gewichtsverhältnis anorganisch-oxidischer Stoff (I) : Übergangsmetall-Ausgangskomponente (IIb) im Bereich von 1 : 0,01 bis 1 : 2, vorzugsweise von 1 : 0,2 bis 1 : 1,5 liegt, die Suspension (III) bei einer

3

Temperatur, die unterhalb von 200, vorzugsweise von 160°C und oberhalb des Schmelzpunktes des verwendeten Oxakohlenwasserstoffs (IIa) liegt, bis zur trockenen Konsistenz-Bildung eines festphasigen Zwischenprodukts (IV) eindampft, und

(1.2) dann

(1.2.1) das aus Stufe (1.1) erhaltene festphasige Zwischenprodukt (IV) und

(1.2.2) eine in einem organischen Lösungsmittel gelöste Aluminiumverbindung (V) der Formel $AlR_mX_{3-m}$, worin stehen

X für einen Rest OR, Chlor, Brom bzw. Wasserstoff, vorzugsweise einen Rest OR bzw. Chlor,

R für einen $C_1$- bis $C_{18}$-Kohlenwasserstoffrest, insbesondere einen $C_1$- bis $C_{12}$-Alkylrest, und vorzugsweise einen $C_2$- bis $C_8$-Alkylrest, und

m für eine Zahl von 1 bis 3, vorzugsweise die Zahl 2,

miteinander in Berührung bringt unter Bildung einer Suspension, mit der Maßgabe, daß das Gewichtsverhältnis festphasiges Zwischenprodukt (IV) : Aluminiumverbindung (V) im Bereich von 1 : 0,05 bis 1 : 2, vorzugsweise 1 : 0,1 bis 1 : 1, liegt, – wobei daß dabei als Suspendiertes resultierende festphasige Produkt (VI) die Übergangsmetall-Katalysatorkomponente (1) ist – .

Das erfindungsgemäße Verfahren ist dadurch gekennzeichnet, daß als Übergangsmetall-Katalysatorkomponente (1) eine solche verwendet wird, bei deren Herstellung man als Übergangsmetall-Ausgangskomponente (IIb) ausschließlich und allein eingesetzt hat einen Vanadiumtrihalogenid-Alkohol-Komplex der Formel $VY_3-nZ-OH$, worin stehen Y für Chlor oder Brom, vorzugsweise Chlor, n für eine Zahl von 1 bis 6, vorzugsweise 3 bis 4, und Z für einen einwertigen, nicht mehr als 10, vorzugsweise nicht mehr als 8 Kohlenstoffatome aufweisenden Kohlenwasserstoffrest gesättigt-aliphatischer oder teils gesättigt-aliphatischer, teils aromatischer Natur, insbesondere einen nicht mehr als 6 Kohlenstoffatome aufweisenden Alkylrest.

Zu dem erfindungsgemäßen Verfahren ist erläuternd zu bemerken :

Das Polymerisationsverfahren als solches kann – unter Beachtung der kennzeichnenden Besonderheiten – praktisch allen einschlägig üblichen technologischen Ausgestaltungen durchgeführt werden, etwa als Suspensions-Polymerisationsverfahren oder Trockenphasen-Polymerisationsverfahren im gerührten oder gewirbelten Bett. Die erwähnten technologischen Ausgestaltungen – mit anderen Worten : die technologischen Varianten der Polymerisation von Olefinen nach Ziegler – sind aus der Literatur und Praxis wohlbekannt, so daß sich nähere Ausführungen zu ihnen erübrigen. Zu bemerken ist allenfalls noch, daß beim erfindungsgemäßen Verfahren die Komponenten des Katalysatorsystems in mannigfacher Weise in den Polymerisationsraum eingebracht werden können, z.B. (i) die Übergangsmetallkomponente (1), die Organoaluminiumkomponente (2) sowie die Organohalogenkomponente (3) alle örtlich gemeinsam, (ii) die gleichen drei Komponenten alle örtliche getrennt voneinander, (iii) die Übergangsmetallkomponente (1) einerseits und ein Gemisch aus (2) und (3) andererseits örtlich getrennt voneinander – was von besonderem Vorteil sein kann – oder (iiii) ein Gemisch aus der Übergangsmetallkomponente (1) und der Organohalogenkomponente (3) einerseits und die Organoaluminiumkomponente (2) andererseits örtlich getrennt voneinander.

Das neue Verfahren – das vorzugsweise kontinuierlich durchgeführt wird – eignet sich zum Herstellen von Homopolymerisaten des Ethens, vornehmlich aber von Copolymerisaten des Ethens mit untergeordneten Mengen an $C_3$- bis $C_8$-, insbesondere $C_4$- bis $C_6$-α-Monoolefinen ; -wobei letztere in Form von Einzelindividuen oder in Form von Gemischen aus zwei oder mehr Einzelindividuen vorliegen können. Zur Copolymerisation geeignete α-Monoolefine sind z.B. Propen, n-Buten-1, 4-Methyl-penten-1, n-Hexen-1, n-Hepten-1 und n-Octen-1, wobei mit n-Buten-1, n-Hexen-1 sowie 4-Methylpenten-1 (oder Gemische aus diesen α-Monoolefinen) die am besten zu bewertenden Polymerisate erhältlich sind, insbesondere solche, die auf 100 Moleinheiten Ethen 0,1-10 Moleinheiten des höheren α-Monoolefins bzw. der höheren α-Monoolefine einpolymerisiert enthalten.

Was die Molekulargewichte der Polymerisate betrifft, so kann deren Regelung in einschlägig üblicher Weise erfolgen, insbesondere mittels Wasserstoff als Regulans.

Zu der beim erfindungsgemäßen Verfahren einzusetzenden Übergangsmetall-Katalysatorkomponente (1) ist im einzelnen das Folgende zu sagen :

Ihre Herstellung erfolgt in zwei Stufen, die oben sowie nachstehend mit (1.1) und (1.2) bezeichnet sind.

In Stufe (1.1) bringt man einen feinteiligen anorganisch-oxidischen Stoff (I) der oben definierten Art und eine bestimmte, oben definierte Lösung (II) miteinander in Berührung, wobei sich eine Suspension (III) bildet, die bis zur trockenen Konsistenz – Bildung eines festphasigen Zwischenprodukts (IV) – eingedampft wird. In Stufe (1.2) wird letzeres mit einer Lösung einer bestimmten, oben definierten Aluminiumverbindung (V) in Berührung gebracht unter neuerlicher Bildung einer Suspension, -wobei das dabei als Suspendiertes resultierende festphasige Produkt (VI) die neue Katalysatorkomponente (1) ist.

Im einzelnen kann man dabei wie folgt verfahren :

Stufe (1.1) :

Der anorganisch-oxidische Stoff (I) wird in Substanz oder in einem Oxakohlenwasserstoff suspendiert (zweckmäßigerweise einem Oxakohlenwasserstoff wie er unter (IIa) definiert ist und mit einem Feststoffgehalt der Suspension von nicht weniger als 5 Gewichtsprozent) mit der Lösung (II) vereinigt und danach die gebildete Suspension (III) eingedampft.

Das Herstellen der Lösung (II) selbst kann so erfolgen, wie man üblicherweise Lösungen herstellt und ist insoweit nicht mit Besonderheiten verbunden.

Als abschließende Maßnahme bei Stufe (1.1) wird die Suspension (III) bis zur trockenen Konsistenz eingedampft, wobei das festphasige Zwischenprodukt (IV) erhalten wird. Hierbei kann man – unter Einhaltung der oben gegebenen Temperaturbedingungen – so verfahren, wie man üblicherweise Suspensionen schonend eindampft. Dies bedeutet, daß es im allgemeinen zweckmäßig – und bei Oxakohlenwasserstoffen mit relativ hoher molarer Masse (IIa) u.U. unerläßlich – ist, das Eindampfen unter mehr oder minder stark erniedrigtem Druck vorzunehmen. Als Faustregel gilt, daß man das Paar Temperatur/Druck so wählen sollte, daß der Eindampfvorgang nach etwa 1 bis 10 Stunden beendet ist. Zweckmäßig ist es auch, das Eindampfen unter steter Wahrung der Homogenität des behandelten Gutes vorzunehmen ; -wofür sich z.B. Rotationsverdampfer bewährt haben. Eine verbleibende Restmenge an Oxakohlenwasserstoff, etwa eine durch Komplexbildung gebundene Menge, ist für das festphasige Zwischenprodukt (IV) im allgemeinen ohne Schaden.

Stufe (1.2)

Man bereitet zunächst in getrennten Ansätzen eine 0,1- bis 50-, vorzugsweise etwa 25-gewichtsprozentige Suspension des festphasigen Zwischenprodukts (IV) sowie eine 5- bis 80-, vorzugsweise etwa 20-gewichtsprozentige Lösung der Aluminiumverbindung (V), wobei als Suspensions- bzw. Lösungsmittel insbesondere Kohlenwasserstoffe, vor allem relativ leicht-siedende Alkan-Kohlenwasserstoffe, wie Hexane, Heptane oder Benzine, in Betracht kommen. Danach vereinigt man die Suspension und die Lösung in solchen Mengenverhältnissen, daß das gewünschte Gewichtsverhältnis erreicht wird. Zur Vereinigung wird man im allgemeinen die Lösung in die Suspension unter Rühren einbringen, denn diese Verfahrensweise ist praktischer als die – ebenfalls mögliche – umgekehrte. Bei Temperaturen von – 25 bis 120°C, insbesondere bei Temperaturen von 25 bis 80°C, ist innerhalb einer Zeitspanne von 15 bis 600 Minuten, insbesondere 60 bis 300 Minuten, die Bildung des – als Suspendiertes vorliegenden – festphasigen Produktes (VI) erfolgt.

Dieses kann zweckmäßigerweise unmittelbar in Form der erhaltenen Suspension – gegebenenfalls nach einer Wäsche mittels Digerieren oder Filtrieren – als Übergangsmetall-Katalysatorkomponente (1) verwendet werden. Falls gewünscht, ist es aber auch möglich, das festphasige Produkt (VI) zu isolieren und dann erst als Katalysatorkomponente (1) einzusetzen ; -wobei sich zum Isolieren z.B. der folgende Weg anbietet : Man trennt das Produkt (VI) von der flüssigen Phase mittels Filtration und wäscht es mit reiner Flüssigkeit (etwa der Art, die man auch als Suspensions- bzw. Lösungsmittel verwendet hatte), worauf man es trocknet ; etwa im Vakuum.

Was die stoffliche Seite der Übergangsmetall-Katalysatorkomponenten (I) betrifft, ist im einzelnen noch das Folgende zu sagen :

Der in Stufe (1.1) einzusetzende anorganisch-oxidische Stoff (I) wird im allgemeinen ein Aluminiumsilikat oder – insbesondere – ein Siliciumdioxid sein ; wichtig ist, daß er die geforderten Eigenschaften besitzt. -Wie sich gezeigt hat, sind die der gegebenen Spezifikation entsprechenden im Handel erhältlichen einschlägig üblichen Trägerstoffe gut geeignet.

Das zu verwendende Lösungsmittel (IIa) ist ein Oxakohlenwasserstoff gesättigt aliphatischer oder teils gesättigt aliphatischer, teils aromatischer Natur, der 1 bis 2 Oxasauerstoffatome sowie mehr als 3 aber weniger als 19 Kohlenstoffatome aufweist, vorzugsweise ein Oxakohlenwasserstoff gesättigt aliphatischer oder teils gesättigt aliphatischer, teils aromatischer Natur, der 1 Oxasauerstoffatom sowie mehr als 3 aber weniger als 11 Kohlenstoffatome aufweist, insbesondere ein ringgeschlossener Oxakohlenwasserstoff gesättigt aliphatischer Natur, der 1 Oxasauerstoffatom sowie 4 bis 6 Kohlenstoffatome aufweist, und vor allem Tetrahydrofuran. Außer dem letztgenannten eignen sich – unter Beachtung der oben wiedergegebenen Rangfolge – als Oxakohlenwasserstoffe weiterhin z.B. Ethylenglykoldimethylether, Anisol, Tetrahydrofuran und Dioxan. Die Oxakohlenwasserstoffe können eingesetzt werden in Form von Einzelindividuen sowie Gemischen aus zwei oder mehr Einzelindividuen.

Der einzusetzende Vanadiumtrihalogenid-Alkohol-Komplex (IIb) hat die Formel $VY_3 \cdot nZ\text{-}OH$, worin stehen Y für Chlor oder Brom, vorzugsweise Chlor, n für eine Zahl von 1 bis 6, vorzugsweise 3 bis 4, und Z für einen einwertigen, nicht mehr als 10, vorzugsweise nicht mehr als 8 Kohlenstoffatome aufweisenden Kohlenwasserstoffrest gesättigt-aliphatischer oder teils gesättigt-aliphatischer, teils aromatischer Natur, insbesondere einen nicht mehr als 6 Kohlenstoffatome aufweisenden Alkylrest. Dabei kann das zugrunde liegende Vanadiumtrihalogenid ein bei Ziegler-Katalysatorsystemen übliches sein. Als alkoholische Komponente eignen sich – unter Wahrung der oben wiedergegebenen Rangfolge – z.B. Methanol, Ethanol, Propanol-2, Butanol-2 und 2-Methylbutanol-2. Die Komplexe können – z.B. zweckmäßigerweise in situ, etwa aus Vanadiumtrichlorid und Propanol-2 in Tetrahydrofuran als Lösungsmittel – nach üblichen Methoden hergestellt sein, z.B. nach D.C. Bradley, M.L. Metha, Can. J. Chem. 40 (1962), 1710/3 ; auch sie können eingesetzt werden in Form von Einzelindividuen sowie Gemischen aus zwei oder mehr Einzelindividuen.

Die in Stufe (1.2) einzusetzende Aluminiumverbindung (V) kann z.B. eine Verbindung sein wie sie repräsentiert wird durch die Formeln $Al(C_2H_5)_3$, $Al(C_2H_5)_2Cl$, $Al(C_2H_5)_2Br$, $Al(C_2H_5)_{1,5}Cl_{1,5}$, $Al(C_2H_5)_{1,5}Br_{1,5}$, $Al(C_2H_5)Cl_2$, $Al(C_2H_5)Br_2$, $Al(C_4H_9)_3$, $Al(C_4H_9)_2Cl$, $Al(C_4H_9)Cl_2$, $Al(C_2H5)"H$, $Al(C_4H_9)_2H$, $Al(C_3H_7)_2(OC_3H_7)$ oder $Al(C_2H_5)_{1,5}(OC_2H_5)_{1,5}$ sowie Isoprenylaluminium. Wie sich gezeigt hat, sind besonders gut geeignet Aluminiumverbindungen der Formeln $C_2H_5AlCl_2$, $(C_2H_5)_2AlCl$ sowie Isoprenylaluminium. Die Aluminiumverbindungen (V) können eingesetzt werden in Form von Einzelindividuen sowie Gemischen aus zwei oder mehr Einzelindividuen.

Die Organoaluminium-Katalysatorkomponente (2) betreffend ist zu sagen, daß sich hierfür die einschlägig üblichen Verbindungen eignen ; als geeignete Individuen sind z.B. zu nennen solche der Formeln $Al(C_2H_5)_3$, $Al(i-C_4H_9)_3$, $Al(n-C_4H_9)_3$, $Al(C_8H_{17})_3$ sowie Isoprenylaluminium.

Als Organohalogen-Katalysatorkomponente (3) schließlich kann zweckmäßigerweise eine Verbindung aus den folgenden Verbindungsklassen eingesetzt werden :

(A) Gesättigte aliphatische Halogenkohlenwasserstoffe ; wobei geeignete Individuen sind solche der Formeln $CCl_4$, $CHCl_3$, $CH_2Cl_2$, $CFCl_3$, $CF_2CL_2$, $CF_3Cl_9$ und $Cl_2FC-CFCl_2$. Davon besonders geeignet sind $CCl_4$, $CHCl_3$, $CH_2Cl_2$ und $CF_2CL_2$. Herausragend gut geeignet ist $CFCl_3$.

(B) Olefinisch ungesättigte aliphatische Halogenkohlenwasserstoffe ; wobei geeignete Individuen sind solche der Formeln $CH_2=CHCl$, $CH_2=CCl_2$, $CHCl=CCl_2$, $CH_2C=CCl_2$, $CH_2=CH-CH_2Cl$ und $CCl_2=CCl-CCl_3$. Davon besonders geeignet sind $CH_2=CHCl$ und $CH_2=CCl_2$. Herausragend gut geeignet sind $CH_2=CH-CH_2Cl$ und $CCl_2=CCl-CCl_3$.

(C) Acetylenisch ungesättigte aliphatische Halogenkohlenwasserstoffe ; wobei geeignete Individuen sind solche der Formeln $CH\equiv C-CH_2Cl$ und $C_2C_5-C\equiv C-CH_2Cl$. Davon besonders geeignet ist $CH\equiv C-CH_2Cl$.

(D) Aromatische Halogenkohlenwasserstoffe ; M wobei geeignete Individuen sind $\alpha$-Chlortoluol, $\alpha,\alpha$-Dichlortoluol, $\alpha,\alpha,\alpha$-Trichlortoluol, Diphenylchlormethan, Diphenyldichlormethan und Triphenylchlormethan. Davon besonders geeignet sind $\alpha$-Chlortoluol, $\alpha,\alpha$-Dichlortoluol und $\alpha,\alpha,\alpha$Trichlortoluol.

(E) Olefinisch ungesättigte aliphatische halogenierte Carbonsäureester ; wobei geeignete Individuen sind 2,3,4,4-Tetrachlorbuten-2-säuremethylester, 2,3,4,4-Tetrachlorbuten-2-säureethylester, 2,3,4,4,-Tetrachlorbuten-2-säure-n-butylester, Methylperchlorcrotonat und Ethylperchlorcrotonat. Davon sind hervorzuheben Methylperchlorcrotonat und 2,3,4,4-Tetrachlorbuten-2-säure-n-butylester.

Wie sich gezeigt hat, sind von den genannten Verbindungsklassen für den erfindungsgemäßen Zweck am besten geeignet Verbindungen der Klassen (A), (B) sowie (C), gefolgt von (D) und schließlich (E). Die betroffenen Verbindungen können eingesetzt werden in Form von Einzelindividuen sowie Gemischen aus zwei oder mehr Einzelindividuen.

Beispiel 1

Herstellung der Übergangsmetall-Katalysatorkomponente (1) :

Stufe (1.1)

Es wurde ausgegangen von (1.1.1) 60 Gewichtsteilen Siliciumdioxid ($SiO_2$, Teilchendurchmesser 20 bis 45 µm, Porenvolumen : 1,7 $cm^3/g$, Oberfläche ; 320 $m^2/g$) sowie (1.1.2) einer Lösung aus 100 Gewichtsteilen Tetrahydrofuran und 74 Gewichtsteilen eines Vanadiumtrihalogenid-Alkohol-Komplexes der Formel $VCl_3 \cdot 4ZOH$, worin Z steht für einen iso-Propylrest. Diese zwei Komponenten wurden vereinigt und die dabei erhaltene Suspension kurz gerührt. Anschließend wurde das gebildete festphasige Zwischenprodukt (IV) isoliert durch Abtreiben der flüchtigen Bestandteile in einem Rotationsverdampfer, der bis zu einem Betriebsdruck von 10 mbar und einer Betriebstemperatur von 70°C gebracht wurde.

Stufe (1.2)

20 Gewichtsteile des in Stufe (1.1) gewonnenen festphasigen Zwischenprodukts (IV) wurden in 103 Gewichtsteilen n-Heptan suspendiert, worauf diese Suspension mit einer Lösung aus 7,2 Gewichtsteilen Diethylaluminiumchlorid in 17 Gewichtsteilen n-Heptan versetzt und die daraus resultierende Suspension kurz bei 65°C gerührt wurde. Anschließend wurde filtriert, drei mal mit n-Heptan gewaschen und im Vakuum getrocknet. Die Analyse des erhaltenen festphasigen Produktes (VI) – d.h. der Katalysatorkomponente (1) – ergab einen Gehalt an Vanadium von 8,5 und an Chlor von 21,1 Gew.%.

Polymerisation :

Ein 10 l Autoklav wurde mit 5 l i-Butan, 0,1 l Buten-1, 0,204 g der wie oben beschrieben hergestellten Katalysatorkomponente (1), 10 mmol Tri-i-butylaluminium als Katalysatorkomponente (2) und 5 mmol Trichlorfluormethan als Organohalogen-Katalysatorkomponente (3), beschickt (entsprechend einem Atomverhältnis Übergangsmetall aus der Katalysatorkomponente (1) : Aluminium aus der Katalysatorkomponente (2) von 1 : 15 sowie einem Molverhältnis Organoaluminium-Katalysatorkomponente (2) zu Organohalogen-Katalysatorkomponente (3) von 1 : 0,5). Sodann wurde unter Rühren und bei den – jeweils durch Regelung konstant gehaltenen – Parametern Ethenpartialdruck : 16,5 bar, Wasserstoffpartialdruck : 1,0 bar, Temperatur : 80°C, über eine Zeitspanne von 90 min polymerisiert ; danach wurde die Polymerisation durch Entspannen abgebrochen.

Nähere Angaben zu dem erhaltenen Copolymerisat finden sich in Tabelle 1.

Beispiel 2

Es wurde die gleiche Katalysatorkomponente (1) eingesetzt wie im Beispiel 1.

Polymerisation :

Ein 10 l Autoklav wurde mit 5 l i-Butan, 0,27 l Buten-1, 0,093 g der Katalysatorkomponente (1), 5 mmol Tri-i-butylaluminium als Katalysator-komponente (2) und 2 mmol Trichlorfluormethan als Organohalogen-Katalysatorkomponente (3), beschickt (entsprechend einem Atomverhältnis Übergangsmetall aus der Katalysatorkomponente (1) : Aluminium aus der Katalysatorkomponente (2) von 1 : 16,5 sowie einem Molverhältnis Organoaluminium-Katalysatorkomponente (2) zu Organohalogen-Katalysatorkomponente (3) von 1 : 0,4). Sodann wurde unter Rühren und bei den – jeweils durch Regelung konstant gehaltenen – Parametern Ethenpartialdruck : 16,5 bar, Wasserstoffpartialdruck : 2,0 bar, Temperatur : 80°C, über eine Zeitspanne von 90 min polymerisiert ; danach wurde die Polymerisation durch Entspannen abgebrochen.

Nähere Angaben zu dem erhaltenen Copolymerisat finden sich in Tabelle 2.

Vergleichsversuch 1a

(gemäß der EP-OS 0 166 888)

Herstellung der Übergangsmetall-Katalysatorkomponente (1) :

Stufe (1.1)

Es wurde ausgegangen von (1.1.1) 60 Gewichtsteilen Siliciumdioxid ($SiO_2$, Teilchendurchmesser 20 bis 45 μm, Porenvolumen : 1,7 cm$^3$/g, Oberfläche ; 320 m$^2$/g) sowie (1.1.2) einer Lösung aus 100 Gewichtsteilen Tetrahydrofuran und 74 Gewichtsteilen einer Übergangsmetall-Komposition, bestehend aus 100 Molteilen eines Vanadiumtrihalogenid-Alkohol-Komplexes der Formel $VCl_3 \cdot 4ZOH$, worin Z steht für einen iso-Propylrest, 10 Molteilen eines Titantrihalogenid-Alkohol-Komplexes der Formel $TiCl_3 \cdot 1/3\ AlCl_3 \cdot 4C_3H_7OH$ sowie 5 Molteilen Zirkontetrachlorid. Diese zwei Komponenten wurden vereinigt und die dabei erhaltene Suspension kurz gerührt. Anschließend wurde das gebildete festphasige Zwischenprodukt (IV) isoliert durch Abtreiben der flüchtigen Bestandteile in einem Rotationsverdampfer, der bis zu einem Betriebsdruck von 10 mbar und einer Betriebstemperatur von 70°C gebracht wurde.

Stufe (1.2)

20 Gewichtsteile des in Stufe (1.1) gewonnenen festphasigen Zwischenprodukts (IV) wurden in 103 Gewichtsteilen n-Heptan suspendiert, worauf diese Suspension mit einer Lösung aus 7,2 Gewichtsteilen Diethylaluminiumchlorid in 17 Gewichtsteilen n-Heptan versetzt und die daraus resultierende Suspension kurz bei 65°C gerührt wurde. Anschließend wurde filtriert, drei mal mit n-Heptan gewaschen und im Vakuum getrocknet. Die Analyse des erhaltenen festphasigen Produktes (VI) – d.h. der Katalysatorkomponente (1) – ergab einen Gehalt an Vanadium von 7,5 und an Chlor von 17,8 Gew.%.

Polymerisation :

Die Polymerisation wurde durchgeführt wie in Beispiel 1 mit der einzigen Ausnahme, daß statt der erfindungsgemäßen Übergangsmetall-Katalysatorkomponente (1) die gleiche Gewichtsmenge der vorstehend beschriebenen Übergangsmetall-Katalysatorkomponente (1) eingesetzt wurde.

Nähere Angaben zu dem erhaltenen Copolymerisat finden sich wiederum in Tabelle 1.

Vergleichsversuch 1b

(gemäß der US-PS 4 508 842)

Herstellung der Übergangsmetall-Katalysatorkomponente (1) :

Es wurde gearbeitet wie in der US-PS, Spalte 6, Zeile 60 bis Spalte 7, Zeile 25, unter "Catalyst Preparation" beschrieben. Die Analyse der so erhaltenen Katalysatorkomponente (1) ergab einen Gehalt an Vanadium von 1,1 Gew.%.

Polymerisation :

Sie wurde durchgeführt wie in Beispiel 1 mit den Ausnahmen, daß statt der erfindungsgemäßen Übergangsmetall-Katalysatorkomponente (1) 0,812 g der vorstehend bezeichneten Übergangsmetall-Katalysatorkomponente, ferner 2,5 mmol Tri-i-butylaluminium und 1,25 mmol Trichlorfluormethan eingesetzt wurden. Somit betrug das Atomverhältnis Übergangsmetall aus der Katalysatorkomponente (1) : Aluminium aus der Organoaluminium-Katalysatorkomponente (2) 1 : 14, und das Molverhältnis von letzterer zur Organohalogen-Katalysatorkomponente (3) 1 : 0,5.

Nähere Angaben zu dem erhaltenen Copolymerisat finden sich in Tabelle 1.

Vergleichsversuch 2a

(gemäß der EP-OS 0 078 996)

Herstellung der Übergangsmetall-Katalysatorkomponente (1) :

Sie erfolgte wie im Beispiel 1 der genannten EP-OS.

Diese Katalysatorkomponente (1) enthielt 8,0 Gew.%. Vanadium und 17,9 Gew.%. Chlor.

Polymerisation :

Sie erfolgte wie in Beispiel 2 zur vorliegenden Erfindung, jedoch wurde statt der dort eingesetzten Katalysatorkomponente (1) die oben bezeichnete in einer Menge von 0,114 g verwendet.

Nähere Angaben zu dem erhaltenen Copolymerisat finden sich in Tabelle 2.

Vergleichsversuch 2b

(gemäß der US-PS 4 508 842)

Es wurde die gleiche Katalysatorkomponente (1) eingesetzt wie in Vergleichsversuch 1b.

Polymerisation :

Sie erfolgte wie in Beispiel 2 zur vorliegenden Erfindung, jedoch wurde statt der dort eingesetzten Katalysatorkomponente (1) die oben bezeichnete in einer Menge von 0,217 g verwendet.

Nähere Angaben zu dem erhaltenen Copolymerisat finden sich wiederum in Tabelle 2.

Tabelle 1

| | [g] | Ausbeute [g/g Kat.Komp.(1)] | HLMI[1] [g/10'] | $[\eta]$[2] [dl/g] | Dichte[3] [g/cm³] | Q[4] | SD [g/l] | Siebanalyse [5] [Gew.%] [mm] | | |
|---|---|---|---|---|---|---|---|---|---|---|
| | | | | | | | | <0,5 | 0,5-1,0 | >1,0 |
| Bsp. 1 | 2140 | 10490 | 5,4 | 4,07 | 0.943 | 28 | 385 | 3,5 | 70,5 | 26,0 |
| Vergl. vers.1a | 970 | 4750 | 3,4 | 4,04 | 0,942 | 20 | 377 | 15,8 | 77,4 | 6,8 |
| Vergl. vers.1b | 1270 | 1560 | 4,5 | 3,92 | 0,944 | 20 | 307 | 6,4 | 51,3 | 42,3 |

[1]  Bestimmt gemäß DIN 53 735, 190°C, 21,6 kp  Belastung

[2]  Bestimmt gemäß DIN 53 720

[3]  Bestimmt gemäß DIN 53 479

[4]  Bestimmt durch Gelpermeationschromatographie = $\overline{M}_w/\overline{M}_n$

[5]  Bestimmt gemäß DIN 53 477

EP 0 312 876 B1

Tabelle 2

| | Ausbeute | | HLMI | $[\eta]$ | Dichte | Q | SD | Siebanalyse [mm] | | [Gew.%] |
|---|---|---|---|---|---|---|---|---|---|---|
| | [g] | [g/g Kat.Komp.(1)] | [g/10'] | [dl/g] | [g/cm³] | | [g/l] | <0,5 | 0,5-1,0 | >1,0 |
| Bsp. 2 | 1240 | 13300 | 25,5 | 1,15 | 0,952 | 9,1 | 385 | 1,7 | 79,5 | 18,6 |
| Vergl. vers.2a | 280 | 2500 | 72,6 | 0,91 | 0,956 | 6,9 | 310 | 30,9 | 63 | 3,5 |
| Vergl. vers.2b | 535 | 2500 | 23,9 | 1,35 | 0,953 | 8,4 | 390 | 60,3 | 36,1 | 0.6 |

EP 0 312 876 B1

Wie aus Tabelle 1 (hochmolekulare Einstellung) und Tabelle 2 (niedermolekulare Einstellung) hervorgeht, wird gemäß der Erfindung die Produktivität gegenüber den entsprechenden Vergleichsversuchen um den Faktor 2,2 und 6,7 (Tabelle 1) bzw. 5,3 (Tabelle 2) erhöht. Die überlegene Kornbeschaffenheit des erfindungsgemäßen Polymerisats drückt sich in der engen Kornverteilung bei erheblich geringeren, technisch unerwünschten Feinanteilen bei vergleichbarer bzw. erhöhter Schüttdichte (SD) aus.

## Ansprüche

1. Verfahren zum Herstellen von Homopolymerisaten des Ethens sowie Copolymerisaten des Ethens mit untergeordneten Mengen an $C_3$- bis $C_8$-$\alpha$-Monolefinen durch Polymerisation des bzw. der Monomeren bei Temperaturen von 30 bis 200 und Drücken von 0,1 bis 200 bar mittels eines Ziegler-Katalysatorsystems aus

(1) einer Übergangsmetall-Katalysatorkomponente und

(2) einer Organoaluminium-Katalysatorkomponente der Formel $AlR_mX_{3-m}$, worin stehen

X für einen Rerst OR, Chlor, Brom bwz. Wasserstoff

R für einen $C_1$- bis $C_{18}$-Kohlenwasserstoffrest, und

m für eine Zahl von 1 bis 3,

sowie

(3) einer Organohalogen-Katalysatorkomponente,

mit den Maßgaben, daß das Atomverhältnis Übergangsmetall aus der Katalysatorkomponente (1) : Aluminium aus der Katalysatorkomponente (2) im Bereich von 1 : 0,1 bis 1 : 500 und das Molverhältnis Organoaluminium-Katalysatorkomponente (2) : Organohalogen-Katalysatorkomponente (3) im Bereich von 1 : 0,001 bis 1 : 50 liegt, und wobei eingesetzt wird als Übergangsmetall-Katalysatorkomponente (1) das festphasige Produkt (VI), das erhalten worden ist, indem man

(1.1) zunächst

(1.1.1) einen feinteiligen, porösen, anorganisch-oxidischen Stoff (I), der einen Teilchendurchmesser von 1 bis 1.000 µm, ein Porenvolumen von 0,3 bis 3 cm³/g sowie eine Oberfläche von 100 bis 1.000 m²/g besitzt und die Formel $SiO_2 \cdot aAl_2O_3$ – worin a steht für eine Zahl im Bereich von 0 bis 2 – hat, und

(1.1.2) eine Lösung (II), wie sie sich ergibt beim Zusammenbringen von

(IIa) 100 Gewichtsteilen eines Oxakohlenwasserstoffs gesättigt aliphatischer oder teils gesättigt aliphatischer, teils aromatischer Natur, der 1 bis 2 Oxasauerstoffatome sowie mehr als 3, aber weniger als 19 Kohlenstoffatome aufweist, und

(IIb) 0,01 bis 50 Gewichtsteilen einer Übergangs metall-Ausgangskomponente

miteinander in Berührung bringt unter Bildung einer Suspension (III), mit der Maßgabe, daß das Gewichtsverhältnis anorganisch-oxidischer Stoff (I) : Übergangsmetall-Ausgangskomponente (IIb) im Bereich von 1 : 0,01 bis 1 : 2 liegt, die Suspension (III) bei einer Temperatur, die unterhalb von 200 und oberhalb des Schmelzpunktes des verwendeten Oxakohlenwasserstoffs (IIa) liegt, bis zur trockenen Konsistenz-Bildung eines festphasigen Zwischenprodukts (IV) eindampft, und

(1.2) dann

(1.2.1) das aus Stufe (1.1) erhaltene festphasige Zwischenprodukt (IV) und

(1.2.2) eine in einem organischen Lösungsmittel gelöste Aluminiumverbindung (V) der Formel $AlR_mX_{3-m}$, worin stehen

X für einen Rest OR, Chlor, Brom bzw. Wasserstoff,

R für einen $C_1$- bis $C_{18}$-Kohlenwasserstoffrest, und

m für eine Zahl von 1 bis 3,

miteinander in Berührung bringt unter Bildung einer Suspension, mit der Maßgabe, daß das Gewichtsverhältnis festphasiges Zwischenprodukt (IV) : Aluminiumverbindung (V) im Bereich von 1 : 0,05 bis 1 : 2 liegt, – wobei das als Suspendiertes resultierende festphasige Produkt (VI) die Übergangsmetall-Katalysatorkomponente (1) ist –,

dadurch gekennzeichnet, daß als Übergangsmetall-Katalysatorkomponente (1) eine solche verwendet wird, bei deren Herstellung man als Übergangsmetall-Ausgangskomponente (IIb) ausschließlich und allein eingesetzt hat einen Vanadiumtrihalogenid-Alkohol-Komplex der Formel $VY_3 \cdot nZ$-OH, worin stehen Y für Chlor oder Brom, n für eine Zahl von 1 bis 6 und Z für einen einwertigen, nicht mehr als 10 Kohlenstoffatome aufweisenden Kohlenwasserstoffrest gesättigt-aliphatischer oder teils gesättigt-aliphatischer, teils aromatischer Natur.

## Claims

1. A process for the preparation of a homopolymer of ethene or a copolymer of ethene with minor amounts of $C_3$-$C_8$-$\alpha$-monoolefins by polymerization of the monomer or monomers at from 30 to 200°C and under from 0.1 to 200 bar using a Ziegler catalyst system consisting of

(1) a transition metal catalyst component and

(2) an organoaluminum catalyst component of the formula $AlR_mX_{3-m}$, where X is a radical OR, chlorine, bromine or hydrogen, R is a $C_1$-$C_{18}$-hydrocarbon radical and m is from 1 to 3, and

(3) an organohalogen catalyst component,

with the provisos that the atomic ratio of transition metal from the catalyst component (1) to aluminum from the catalyst component (2) is from 1 : 0.1 to 1 : 500 and the molar ratio of organoaluminum catalyst component (2) to organohalogen catalyst component (3) is from 1 : 0.001 to 1 : 50, and the transition metal catalyst component (1) used is the solid-phase product (VI) which has been obtained by a method in which

(1.1) first

(1. 1. 1) a finely divided, porous, inorganic oxidic substance (I) which has a particle diameter of from 1 to 1,000 µm, a pore volume of from 0.3 to 3 cm³/g and a specific surface area of from 100 to 1,000 m²/g and is of the formula $SiO_2 \cdot aAl_2O_3$, where a is from 0 to 2, and

(1.1.2) a solution (II) as obtained on combining

(IIa) 100 parts by weight of a saturated aliphatic or partially saturated aliphatic and partially aromatic oxahydrocarbon of 1 to 2 oxa oxygen atoms and more than 3 but less than 19 carbon atoms and

(IIb) from 0.01 to 50 parts by weight of a transition metal starting component

are brought into contact with one another with formation of a suspension (III), with the proviso that the weight ratio of inorganic oxidic substance (I) to transition metal starting component (IIb) is from 1 : 0.01 to 1 : 2, and the suspension (III) is evaporated to dryness at below 200°C and above the melting point of the oxahydrocarbon (IIa) used, with formation of a solid-phase intermediate (IV), and

(1.2) then

(1.2.1) the solid-phase intermediate (IV) obtained from stage (1.1) and

(1. 2. 2) an aluminum compound (V) which is dissolved in an organic solvent and is of the formula $AlR_mX_{3-m}$, where X is a radical OR, chlorine, bromine or hydrogen, R is a $C_1$-$C_{18}$-hydrocarbon radical, and m is from 1 to 3, are brought into contact with one another with formation of a suspension, with the proviso that the weight ratio of solid-phase intermediate (IV) to aluminum compound (V) is from 1 : 0.05 to 1 : 2, the resulting suspended solid-phase product (VI) being the transition metal catalyst component (1),

wherein the transition metal catalyst component (1) used is one which has been prepared using, as transition metal starting component (IIb), exclusively a vanadium trihalide/alcohol complex of the formula $VY_3$-nZ-OH, where Y is chlorine or bromine, n is from 1 to 6 and Z is a monovalent saturated aliphatic or partially saturated aliphatic and partially aromatic hydrocarbon radical of not more than 10 carbon atoms.

## Revendications

1. Procédé de préparation d'homopolymères de l'éthylène ainsi que de copolyméres de l'éthylène avec de faibles quantités d'α-monooléfines en $C_3$ à $C_8$, par polymerisation du ou des monomères à des températures de 30 à 200°C et sous des pressions de 0,1 à 200 bars, à l'aide d'un système catalytique de Ziegler composé

(1) d'un composant de catalyseur à base d'un métal de transition et

(2) d'un composant de catalyseur organo-aluminique de formule $AlR_mX_{3-m}$, dans laquelle

X est mis pour un reste OR ou pour un atome de chlore, de brome ou d'hydrogène,

R est mis pour un reste hydrocarboné en $C_1$ à $C_{18}$ et

m est mis pour un nombre de 1 à 3,

ainsi que

(3) d'un composant de catalyseur organohalogéné,

étant spécifié que le rapport atomique du métal de transition du composant de catalyseur (1) à l'aluminium du composant de catalyseur (2) se situe dans la gamme de 1 : 0,1 à 1 : 500 et que le rapport moléculaire du composant de catalyseur organo-aluminique (2) au composant de catalyseur organohalogéné (3) se situe dans la gamme de 1 : 0,001 à 1 : 50, avec utilisation, comme composant de catalyseur à base de métal de transition (1), du produit en phase solide (VI) que l'on a obtenu

(1.1) tout d'abord en mettant en contact mutuel, avec formation d'une suspension (III),

(1.1.1) une matière oxydée inorganique, poreuse et finement divisée (I) qui présente un diamètre de particules de 1 à 1000 µm, un volume de pores de 0,3 à 3 cm³/g et une surface spécifique de 100 à 1000 m²/g et qui répond à la formule $SiO_2 \cdot aAl_2O_3$ (dans laquelle a est mis pour un nombre dans la gamme de 0 à 2), et
(1.1.2) une solution (II) obtenue en mélangeant

(IIa) 100 parties en poids d'un oxa-hydrocarbure de nature aliphatique saturée ou de nature en partie aliphatique saturée et en partie aromatique, qui renferme 1 à 2 atomes d'oxygène et plus de 3, mais moins de 19 atomes de carbone, et

(IIb) 0,01 à 50 parties en poids d'un composant de départ à base de métal de transition,

étant spécifié que le rapport en poids de la matière oxydée inorganique (I) au composant de départ à base de métal de transition (IIb) se situe dans la gamme de 1 : 0,01 à 1 : 2,

et en évaporant la suspension (III) à une température qui se situe au-dessous de 200°C et au-dessus du point de fusion de l'oxa-hydrocarbure (IIa) utilisé, jusqu'à la consistance sèche [formation d'un produit intermédiaire en phase solide (IV)],

(1.2) puis en mettant en contact mutuel, avec formation d'une suspension,

(1.2.1) le produit intermédiaire en phase solide (IV) obtenu dans l'étape (1.1) et

(1.2.2) un composé de l'aluminium (V) dissous dans un solvant organique et répondant à la formule $AlR_m X_{3-m}$ dans laquelle

X est mis pour un reste OR ou pour un atome de chlore, de brome ou d'hydrogène,

R est mis pour un reste hydrocarboné en $C_1$ à $C_{18}$ et

m est mis pour un nombre de 1 à 3,

étant spécifié le rapport en poids du produit intermédiaire en phase solide (IV) au composé de l'aluminium (V) se situe dans la gamme de 1 : 0,05 à 1 : 2,

le produit en phase solide (VI) résultant en tant que produit en suspension étant le composant de catalyseur à base de métal de transition (1),

caractérisé en ce qu'on utilise, en tant que composant de catalyseur à base de métal de transition (1), un composant dans la préparation duquel on a utilisé exclusivement et uniquement, comme composant de départ à base de métal de transition (IIb), un complexe trihalogénure de vanadium-alcool de formule $VY_3 \cdot nZ\text{-}OH$, dans laquelle Y est mis pour un atome de chlore ou de brome, n pour un nombre de 1 à 6 et Z pour un reste hydrocarboné monovalent, ne renfermant pas plus de 10 atomes de carbone, de nature aliphatique saturée ou de nature partiellement aliphatique saturée et partiellement aromatique.